# EUROPEAN PATENT SPECIFICATION

(11) **EP 4 306 416 B1**
(45) Date of publication and mention of the grant of the patent: **07.10.2026**
(21) Application number: 23184195.8
(22) Date of filing: 07.07.2023
(51) Int. Cl.: B64D 13/06, B64D 41/00

(54) **RAM AIR COOLING TURBINE GENERATOR**
STAULUFTKÜHLUNGSTURBINENGENERATOR
GÉNÉRATEUR DE TURBINE À REFROIDISSEMENT PAR AIR DYNAMIQUE

(30) Priority: 12.07.2022 US 202217863018
(43) Date of publication of application: 17.01.2024
(73) Proprietor: Hamilton Sundstrand Corporation, Charlotte, NC 28217-4578 (US)
(72) Inventor: VIGNALI, Mark G., Simsbury, CT (US)
(74) Representative: Dehns

(56) References cited:
- US-A- 5 505 587
- US-A- 6 127 758
- US-A1- 2019 234 308
- US-A1- 2020 346 763

## Description

### BACKGROUND

Exemplary embodiments pertain to the art of thermal management of and, in particular, to thermal management of one or more loads of a vehicle.

A typical commercial aircraft includes at least several nonintegrated cooling systems configured to provide temperature control to various regions of the aircraft. For example, an aircraft environmental control system primarily provides heating and cooling for the aircraft cabin area. In addition, a galley chiller system is dedicated to refrigerating the food carts in the galleys located throughout the aircraft. Since each system has a significant weight and power requirement, the overall efficiency of the aircraft is affected by these nonintegrated systems.

One or more of these cooling systems may rely on ram or fresh air to condition, i.e., to cool or heat another medium. However, in applications where the aircraft is travelling at supersonic speeds, the temperature of the ram air may be too high to effectively remove heat from another load.

US 2019/234308 A1, US 5,505,587 A and US 6,127,758 A describe various ram air turbine generators.

### BRIEF DESCRIPTION

According to an embodiment, there is provided a cooling system for a vehicle according to claim 1.

In addition to one or more of the features described above, in further embodiments the turbine is directly connected to the inlet.

In addition to one or more of the features described above, in further embodiments including a bypass conduit extending from the inlet to downstream of the turbine outlet and a valve associated with the bypass conduit.

In addition to one or more of the features described above, in further embodiments the cooling system is operable in a first mode and a second mode, the valve being closed in the first mode, and the valve being at least partially open in the second mode.

In addition to one or more of the features described above, in further embodiments the generator is electrically coupled to at least one load of the vehicle.

In addition to one or more of the features described above, in further embodiments the vehicle is an aircraft.

In addition to one or more of the features described above, in further embodiments the vehicle is operable in a supersonic cruise condition.

According to an embodiment, there is provided a method of operating a cooling system for a vehicle according to claim 7.

In addition to one or more of the features described above, in further embodiments including providing the medium directly from the inlet to the turbine.

In addition to one or more of the features described above, in further embodiments including opening a valve arranged within a bypass conduit such that at least some of the medium provided from the inlet is configured to bypass the turbine.

In addition to one or more of the features described above, in further embodiments including mixing the at least one of the medium that bypasses the turbine with the expanded medium downstream from the turbine outlet.

In addition to one or more of the features described above, in further embodiments opening the valve occurs when the vehicle is travelling at subsonic speeds or when the vehicle is grounded.

In addition to one or more of the features described above, in further embodiments the valve is closed when the vehicle is travelling at supersonic speeds.

In addition to one or more of the features described above, in further embodiments including delivering energy from the generator to at least one load of the vehicle.

In addition to one or more of the features described above, in further embodiments the vehicle is an aircraft.

### BRIEF DESCRIPTION OF THE DRAWINGS

The following descriptions should not be considered limiting in any way. With reference to the accompanying drawings, like elements are numbered alike:

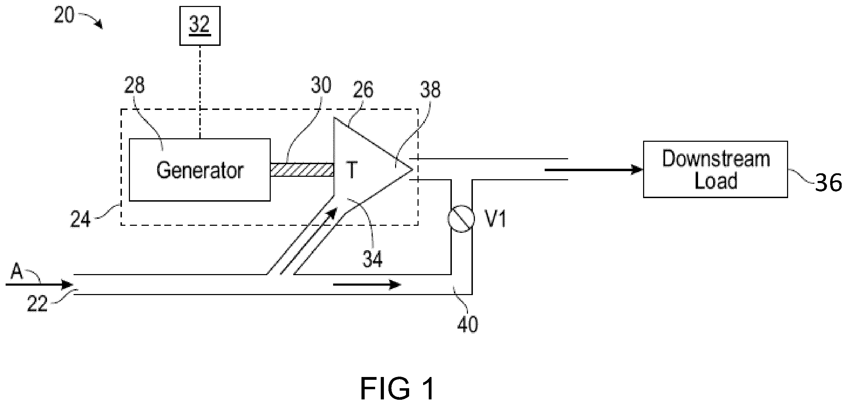

The Figure is a schematic diagram of a portion of a cooling system of a vehicle according to an embodiment.

### DETAILED DESCRIPTION

A detailed description of one or more embodiments of the disclosed apparatus and method are presented herein by way of exemplification and not limitation with reference to the Figures.

With reference now to the Figure, a schematic diagram of a portion of a cooling system 20 of a vehicle is illustrated. The cooling system 20 may be a refrigeration or air cycle subsystem and is configured to receive a medium A at an inlet 22. In the illustrated, non-limiting embodiment, the medium is fresh air, such as outside air for example. This outside air, also referred to herein as RAM air, can be procured via one or more scooping mechanisms, such as an impact scoop or a flush scoop for example. When the cooling system 20 is implemented on an aircraft, the medium A is generally at an ambient pressure equal to an air pressure outside of the aircraft when the aircraft is on the ground and is between an ambient pressure and a cabin pressure when the aircraft is in flight. It should be understood that any suitable medium A is within the scope of the disclosure. For example, other suitable mediums A available on an aircraft include, but are not limited to bleed air, which is pressurized air originating from, i.e., being "bled" from, an engine or auxiliary power unit of the aircraft, or cabin discharge air, which is air leaving the cabin and that would typically be discharged overboard.

It should be understood that the elements of the cooling system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the cooling system 20 can be regulated to a desired value.

In the illustrated, non-limiting embodiment, the cooling system 20 includes a turbo-generator 24 arranged directly downstream from the inlet 22. As shown, the turbo-generator 24 includes a turbine 26 that directly drives an electric generator 28 via a shaft 30. Although the turbine 26 and the electric generator 28 are illustrated as being connected directly to the same shaft 30, it should be understood that embodiments where the generator 28 is indirectly connected to the turbine 26, such as where the generator 28 includes a separate shaft connected to the shaft 30 via a coupler are also within the scope of the disclosure. A turbine 26 is a mechanical device that expands a medium and extracts work therefrom (also referred to as extracting energy) to drive the generator 28 via the shaft 30. Accordingly, rotation of the turbine 26 extracts energy from the medium and converts it into electrical energy via the generator 28. The energy created at the generator 28 may be stored, sent to at least one load of the vehicle, illustrated schematically at 32, or alternatively, sent to an aircraft bus (not shown), where it may then be supplied to one or more electrical loads of the vehicle 10.

During operation of the cooling system 20 in a first mode when the vehicle is at a high altitude, such as during a supersonic cruise condition for example, the medium at the inlet 22 is provided to the inlet 34 of the turbine 26. Within the turbine 26, the medium A is expanded and work is extracted therefrom. The work extracted from the medium A within the turbine 26 is used to drive the generator 28. The expanded medium A1 output from the turbine 26 has a reduced temperature and pressure relative to the medium A provided to the inlet 34 of the turbine 26. From the turbine 26, the expanded medium A1 is delivered to at least one downstream component or systems, illustrated schematically at 36. In the illustrated, non-limiting embodiment, the downstream component is an environmental control system, and the ram air may be provided to at least one heat exchanger of a ram air circuit of the environmental control system 36. However, embodiments where the ram air is provided to another component or system of the aircraft are also contemplated herein.

In an embodiment, a bypass conduit 40 extends from upstream of the turbine inlet 34 to downstream of the turbine outlet 38. In a second mode of operation, a valve V1 arranged within the bypass conduit 40 may be opened such that at least some, and in some embodiments all of the flow of medium A from the inlet 22 is configured to bypass the turbine 26 via the bypass conduit 40. In such embodiments, the medium A may be mixed with the expanded medium A1 output from the turbine 26 to control the temperature of the medium (A+A1) provided to the one or more downstream components 36. Accordingly, in the second mode of operation, the temperature of the medium provided to the downstream load may be any temperature between the temperature of the expanded medium A1 output from the turbine and the temperature of the medium A at the inlet 22. The cooling system 20 may be operable in the second mode when the vehicle or aircraft is travelling at subsonic speeds, or when the aircraft is on the ground.

As previously noted, during high speed flight, such as supersonic flight for example, the ram air temperature is elevated, thereby limiting the cooling capacity of the ram air. Inclusion of the turbo-generator 24 as illustrated and described herein is configured to reduce the temperature and pressure of the ram air so that the ram air maintains an adequate flow through the cooling system while enhancing the cooling capacity of the ram air.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made thereof without departing from the scope of the present disclosure, as long as the changes fall within the scope of the claims. In addition, many modifications may be made to adapt a particular situation or material to the teachings of the present disclosure. Therefore, it is intended that the present disclosure not be limited to the particular embodiment disclosed as the best mode contemplated for carrying out this present disclosure, but that the present disclosure will include all embodiments falling within the scope of the claims.

## Claims

1. A cooling system (20) for a vehicle comprising:
an inlet (22) for receiving a medium, wherein the medium is ram air; and
a turbo-generator (24) fluidly connected to the inlet (22), the turbo-generator comprising a turbine (26) operably coupled to a generator (28) by a shaft (30), the turbine (26) having a turbine inlet (34) and a turbine outlet (38), wherein the turbine inlet (34) being fluidly coupled to the inlet (22), and
at least one downstream component (36) fluidly coupled to the turbine outlet (38), wherein the medium is configured as a heat sink at the at least one downstream component, and **characterised in that** the at least one downstream component includes an environmental control system (36) comprising a ram air circuit having at least one heat exchanger, wherein the medium is expanded at the turbine and the expanded medium is provided to the at least one heat exchanger to absorb heat at the heat exchanger.

2. The cooling system of claim 1, wherein the turbine (26) is directly connected to the inlet (22).

3. The cooling system of any preceding claim, further comprising:
a bypass conduit (40) extending from the inlet (22) to downstream of the turbine outlet (38); and
a valve (V1) associated with the bypass conduit (40), and preferably wherein the cooling system (20) is operable in a first mode and a second mode, the valve (V1) being closed in the first mode, and the valve (V1) being at least partially open in the second mode.

4. The cooling system of any preceding claim, wherein the generator (28) is electrically coupled to at least one load of the vehicle.

5. The cooling system of any preceding claim, wherein the vehicle is an aircraft.

6. The cooling system of any preceding claim, wherein the vehicle is operable in a supersonic cruise condition.

7. A method of operating a cooling system (20) for a vehicle comprising:
receiving a medium at an inlet (22), the medium being ram air;
expanding the medium within a turbine (26) to create an expanded medium that is output from a turbine outlet (38), the turbine being fluidly coupled to the inlet; and
creating electricity at a generator (28) in response to expanding the medium within the turbine, and
providing the expanded medium to at least one downstream component (36), the expanded medium being configured as a heat sink at the at least one downstream component;
**characterised in that** the at least one downstream component includes an environmental control system (36) comprising a ram air circuit having at least one heat exchanger, the expanded medium being provided to the at least one heat exchanger to absorb heat.

8. The method of claim 7, further comprising providing the medium directly from the inlet (22) to the turbine (26).

9. The method of any of claims 7-8, further comprising opening a valve (V1) arranged within a bypass conduit (40) such that at least some of the medium provided from the inlet (22) is configured to bypass the turbine (26).

10. The method of claim 9, further comprising mixing the at least one of the medium that bypasses the turbine (26) with the expanded medium downstream from the turbine outlet (38); and/or
wherein opening the valve (V1) occurs when the vehicle is travelling at subsonic speeds or when the vehicle is grounded; and/or
wherein the valve is closed when the vehicle is travelling at supersonic speeds.

11. The method of any of claims 7-10, further comprising delivering energy from the generator (28) to at least one load of the vehicle.

12. The method of any of claims 7-11, wherein the vehicle is an aircraft.

## Patentansprüche

1. Kühlsystem (20) für ein Fahrzeug, umfassend:
einen Einlass (22) zum Aufnehmen eines Mediums, wobei das Medium Stauluft ist; und
einen Turbogenerator (24), der fluidisch mit dem Einlass (22) verbunden ist, der Turbogenerator umfassend eine Turbine (26), die über eine Welle (30) mit einem Generator (28) wirkgekoppelt ist, die Turbine (26) aufweisend einen Turbineneinlass (34) und einen Turbinenauslass (38), wobei der Turbineneinlass (34) fluidisch mit dem Einlass (22) gekoppelt ist, und
mindestens ein stromabwärts gelegenes Bauteil (36), das fluidisch mit dem Turbinenauslass (38) gekoppelt ist, wobei das Medium als eine Wärmesenke an dem mindestens einen stromabwärts gelegenen Bauteil ausgelegt ist, und **dadurch gekennzeichnet, dass**
das mindestens eine stromabwärts gelegene Bauteil ein Umweltkontrollsystem (36) beinhaltet, umfassend einen Stauluftkreislauf, der mindestens einen Wärmetauscher aufweist,
wobei das Medium an der Turbine expandiert wird und das expandierte Medium für den mindestens einen Wärmetauscher bereitgestellt wird, um Wärme an dem Wärmetauscher zu absorbieren.

2. Kühlsystem nach Anspruch 1, wobei die Turbine (26) direkt mit dem Einlass (22) verbunden ist.

3. Kühlsystem nach einem der vorhergehenden Ansprüche, ferner umfassend:
eine Umgehungsleitung (40), die sich von dem Einlass (22) bis stromabwärts des Turbinenauslasses (38) erstreckt; und
ein Ventil (V1), das der Umgehungsleitung (40) zugehörig ist, und wobei das Kühlsystem (20) vorzugsweise in einem ersten Modus und einem zweiten Modus betreibbar ist, wobei das Ventil (V1) in dem ersten Modus geschlossen ist und das Ventil (V1) in dem zweiten Modus mindestens teilweise geöffnet ist.

4. Kühlsystem nach einem der vorhergehenden Ansprüche, wobei der Generator (28) elektrisch mit mindestens einer Last des Fahrzeugs gekoppelt ist.

5. Kühlsystem nach einem der vorhergehenden Ansprüche, wobei das Fahrzeug ein Luftfahrzeug ist.

6. Kühlsystem nach einem der vorhergehenden Ansprüche, wobei das Fahrzeug in einem Überschallreiseflugzustand betreibbar ist.

7. Verfahren zum Betreiben eines Kühlsystems (20) für ein Fahrzeug, umfassend:
Aufnehmen eines Mediums an einem Einlass (22), wobei das Medium Stauluft ist;
Expandieren des Mediums innerhalb einer Turbine (26), um ein expandiertes Medium, das aus einem Turbinenauslass (38) ausgegeben wird, zu erzeugen, wobei die Turbine fluidisch mit dem Einlass gekoppelt ist; und
Erzeugen von Elektrizität an einem Generator (28) als Reaktion auf das Expandieren des Mediums innerhalb der Turbine und
Bereitstellen des expandierten Mediums für mindestens ein stromabwärts gelegenes Bauteil (36), wobei das expandierte Medium als eine Wärmesenke an dem mindestens einen stromabwärts gelegenen Bauteil ausgelegt ist;
**dadurch gekennzeichnet, dass**
das mindestens eine stromabwärts gelegene Bauteil ein Umweltkontrollsystem (36) beinhaltet, umfassend einen Stauluftkreislauf, der mindestens einen Wärmetauscher aufweist, wobei das expandierte Medium für den mindestens einen Wärmetauscher bereitgestellt wird, um Wärme zu absorbieren.

8. Verfahren nach Anspruch 7, ferner umfassend ein Bereitstellen des Mediums für die Turbine (26) direkt aus dem Einlass (22).

9. Verfahren nach einem der Ansprüche 7-8, ferner umfassend ein Öffnen eines innerhalb einer Umgehungsleitung (40) angeordneten Ventils (V1) derart, dass mindestens etwas von dem Medium, das aus dem Einlass (22) bereitgestellt wird, ausgelegt ist, um die Turbine (26) zu umgehen.

10. Verfahren nach Anspruch 9, ferner umfassend ein Vermischen des mindestens einen von dem Medium, das die Turbine (26) umgeht, mit dem expandierten Medium stromabwärts des Turbinenauslasses (38); und/oder
wobei ein Öffnen des Ventils (V1) erfolgt, wenn sich das Fahrzeug mit Unterschallgeschwindigkeiten bewegt oder wenn das Fahrzeug am Boden ist; und/oder
wobei das Ventil geschlossen ist, wenn sich das Fahrzeug mit Überschallgeschwindigkeiten bewegt.

11. Verfahren nach einem der Ansprüche 7-10, ferner umfassend ein Zuführen von Energie von dem Generator (28) zu mindestens einer Last des Fahrzeugs.

12. Verfahren nach einem der Ansprüche 7-11, wobei das Fahrzeug ein Luftfahrzeug ist.

## Revendications

1. Système de refroidissement (20) pour un véhicule comprenant :
une entrée (22) destinée à recevoir un milieu, le milieu étant de l'air dynamique ; et
un turbogénérateur (24) relié fluidiquement à l'entrée (22), le turbogénérateur comprenant une turbine (26) couplée fonctionnellement à un générateur (28) par un arbre (30), la turbine (26) présentant une entrée de turbine (34) et une sortie de turbine (38), l'entrée de turbine (34) étant reliée fluidiquement à l'entrée (22), et
au moins un composant en aval (36) couplé fluidiquement à la sortie de turbine (38), le milieu étant configuré comme un dissipateur thermique au niveau du ou des composants en aval,
et **caractérisé en ce que**
le ou les composants en aval incluent un système de contrôle environnemental (36) comprenant un circuit d'air dynamique présentant au moins un échangeur de chaleur, le milieu étant détendu au niveau de la turbine et le milieu détendu étant fourni au ou aux échangeurs de chaleur pour absorber de la chaleur au niveau de l'échangeur de chaleur.

2. Système de refroidissement selon la revendication 1, dans lequel la turbine (26) est directement reliée à l'entrée (22).

3. Système de refroidissement selon l'une quelconque des revendications précédentes, comprenant en outre :
un conduit de dérivation (40) s'étendant de l'entrée (22) jusqu'en aval de la sortie de la turbine (38) ; et
une vanne (V1) associée au conduit de dérivation (40), et le système de refroidissement (20) étant de préférence fonctionnel dans un premier mode et un deuxième mode, la vanne (V1) étant fermée dans le premier mode et la vanne (V1) étant au moins partiellement ouverte dans le deuxième mode.

4. Système de refroidissement selon l'une quelconque des revendications précédentes, dans lequel le générateur (28) est couplé électriquement à au moins une charge du véhicule.

5. Système de refroidissement selon l'une quelconque des revendications précédentes, dans lequel le véhicule est un aéronef.

6. Système de refroidissement selon l'une quelconque des revendications précédentes, dans lequel le véhicule peut être utilisé dans un état de croisière supersonique.

7. Procédé de fonctionnement d'un système de refroidissement (20) pour un véhicule comprenant :
la réception d'un milieu à une entrée (22), le milieu étant de l'air dynamique ;
la détente du milieu à l'intérieur d'une turbine (26) pour créer un milieu détendu qui est évacué par une sortie de turbine (38), la turbine étant couplée fluidiquement à l'entrée ; et
la production d'électricité au niveau d'un générateur (28) en réponse à la détente du milieu à l'intérieur de la turbine, et la fourniture du milieu détendu à au moins un composant en aval (36), le milieu détendu étant configuré comme un dissipateur thermique au niveau du ou des composants en aval ;
**caractérisé en ce que**
le ou les composants en aval incluent un système de régulation environnementale (36) comprenant un circuit à air dynamique muni d'au moins un échangeur de chaleur, le milieu détendu étant fourni audit ou auxdits échangeurs de chaleur afin d'absorber de la chaleur.

8. Procédé selon la revendication 7, comprenant en outre la fourniture du milieu directement de l'entrée (22) à la turbine (26).

9. Procédé selon l'une quelconque des revendications 7 à 8, comprenant en outre l'ouverture d'une vanne (V1) disposée à l'intérieur d'un conduit de dérivation (40) de telle sorte qu'au moins une partie du milieu fourni à partir de l'entrée (22) est configuré pour contourner la turbine (26).

10. Procédé selon la revendication 9, comprenant en outre le mélange d'au moins un du milieu qui contourne la turbine (26) avec le milieu détendu en aval de la sortie de la turbine (38) ; et/ou
dans lequel l'ouverture de la vanne (V1) se produit lorsque le véhicule se déplace à des vitesses subsoniques ou lorsque le véhicule est au sol ; et/ou
dans lequel la vanne est fermée lorsque le véhicule se déplace à des vitesses supersoniques.

11. Procédé selon l'une quelconque des revendications 7 à 10, comprenant en outre la fourniture d'énergie du générateur (28) à au moins une charge du véhicule.

12. Procédé selon l'une quelconque des revendications 7 à 11, dans lequel le véhicule est un aéronef.
